# EUROPEAN PATENT APPLICATION

(11) **EP 3 236 399 A1**
(43) Date of publication of application: **25.10.2017**
(21) Application number: 17167602.6
(22) Date of filing: 21.04.2017
(51) Int. Cl.: G06Q 10/06, G06Q 50/30

(54) **A METHOD FOR UPDATING A TIME-TABLE IN ORDER TO REDUCE A RECURRENT DELAY**

(30) Priority: 21.04.2016 IN 201641013974
(71) Applicant: ALSTOM Transport Technologies, 93400 Saint-Ouen (FR)
(72) Inventor: RAMARAJ, Ravindran, 560068 BANGALORE URBAN (IN); ESWARA, Ganesh-Prasad, 570004 MEDARAKERI (IN)
(74) Representative: Lavoix

(57) **Abstract**

This method comprises the steps of: building (10) a database storing historical data associated with trains circulating with a delay by comparison to a time-table; analyzing (20) the database to identify recurrent delays on a time period of interest; determining (30) a best decision leading to the management of the recurrent delay; optimizing the (40) time-table with this best decision to obtain an updated time-table; and deciding (50) to substitute the time-table with the updated time-table.

## Description

The present invention concerns methods and systems for time-table optimization.

A time-table for operating a given railway, gathers the schedule of every train circulating on this railway, a schedule associating a time with each position of the corresponding train during its journey.

Once a time-table has been generated for a particular railway, the train operating company manages trains on the railway according to this time-table, never expecting any alteration during train operations, i.e. any delays.

But, in facts, several events may alter the journey of a train, leading to the train circulating with a delay.

Such an event can occur when there is a conflict between the schedules of two trains, typically, two trains trying to share the same railway resource at the same time.

But, delay is a major factor leading to resentment among the train users, who expect to reach their destination at the "expected" time, as defined in the time-table.

In the prior art, delays are managed in real time by updating the schedule of the train circulating with a delay relative to the time-table. For example, stop duration of the train in an intermediary station can be reduced or the speed of the train between two stations can be altered. In case of a conflict, one of the trains can be rerouted along another track portion of the railway.

Thus, when a particular train travels with a delay, a traffic management operator takes a decision about the way to reschedule the train in order to reduce or cancelled its current delay.

For a recurrent delay, i.e. a delay affecting systematically the schedule of a particular train, the traffic management operator repeats the step of taking a decision about the way to reschedule the train each time the delay occurred.

It is to be underlined that the decision taken is not necessary identical each time, for example the decisions taken for cancelling the same recurrent delay may vary when the traffic management operator in charge is changed, or when the delay with which the train is circulating is small or important.

But, what is certain is that there is no optimization of the existing time-table based on the previous experience of use of the railway.

The invention therefore aims at overcoming this problem.

To this end, the object of the invention is to provide a method and a system according to the claims.

The invention and its advantages will be better understood upon reading the description which will follow, provided solely by way of example with reference made to the accompanying drawing in which:

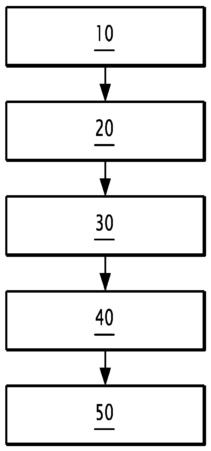

- Figure 1 is a schematic view of a preferred embodiment of the method according to the invention.

Instead of having to take a decision each time a recurrent delay imparts the journey of a train, based on the fact that a recurrent delay is an expected delay, the method according to the invention and the system programmed to execute this method contemplate to incorporate the best decision into an updated time-table so as to eliminate a recurrent delay,.

The system according to the invention maintains a historical database on all the delays and/or conflicts and the decisions provided by the operators to solve the same, and determines a best decision in terms of optimization of the railway, which can be taken into account in an updated time-table.

The first step 10 consists in building a database storing historical data associated with a delay, i.e. a divergence between the expected schedule of a train as indicated by the current time-table and its real schedule with which the train is currently circulating.

The data stored in the database are of various types.

When a train circulates with a delay, the full context in relation with the railway operative status is stored into the database.

In addition, every time a delay and/or a conflict occurs the operator takes a decision to reduce or cancel this delay and provides the justification for this delay. Both the decision and the justification are stored in the database.

For example, the database comprises the following time stamped information:
- Delay: Conflicts; Manual update on train journey; Infrastructure; Exceptions...
- Justification: Delay justification; Task divergence...
- Decision: selected conflict solutions (from CDS); Remedy plan...
- Mitigation: Remedy plan; Applied Conflict solutions (from CDS)...

Then, at step 20, the historical data stored into the database are analyzed to identify recurrent delays on a time period of interest.

For each such recurrent delay, a report is obtained that lists the various resources or causes involved in the occurrence of this delay, together with the various decisions taken to deal with this delay through the time period considered.

At step 30, the best decision to cancel a recurrent delay is determined.

The best decision is in fact the result of an optimization process, which is realized by a heuristic engine.

This engine studies and analyzes anything and everything related to the recurrent delays, in particular correlations between resources (causes) and delay (consequences) that cannot be identified by the operator, for example the changes in the neighboring network, resource unavailability, infrastructure planning changes, train composition changes, exception management, unplanned possession, catenary shutdown etc.)

This engine then elaborates different possible decisions for cancelling the delay.

A possible decision can be a decision taken previously by the operator, eventually more finely tuned, or a combination between decisions previously taken by the operator, etc.

The engine finds out the critical routes as well as the critical time hours and also the necessary buffer times between the successive pairs of trains.

This engine is based on a multi-objective genetic algorithm integrating constraints associated with different types of objectives, for example business trade off objectives, concept drifting objectives, service intention objectives...

Each possible decision is associated with a set of scores, each score measuring the compliance with a corresponding objective.

Scores can be weighted based on the operator's previous choices (the decision chosen most frequently is given a highest score) and other pre-defined criterion (for e.g. the highest priority train's schedule maybe the least altered).

The best decision is then selected based on said scores.

At step 40, the existing time-table is updated with this best decision. For example, if the best decision for reducing the recurrent delay is to decrease the stop duration in a given station, rather than increasing the speed of the train between two stations, the time-table is updated with a shorter stop duration at said given station.

Similarly, when the best decision to reduce a recurrent delay caused by a conflict between two trains involves rerouting one of the trains on one portion of its journey, the time-table is updated with a new route for that train which integrates the rerouting portion.

The system modifies the existing time-table to obtain an updated time-table for which the causes of the recurrent delay are avoided and thus this delay is well managed.

At step 50, this updated time-table is proposed to the Train Operating Company (TOC), so that they can decide to substitute the existing time-table with the updated time-table.

If this updated time-table is selected, then it becomes the current time-table with which to operate the railway.

As can be seen by the person skilled in the art, the system according to the invention avoids recurrent delays and increases the train punctuality. Besides, an effective utilization of the Infrastructure resources will be ensured.

## Claims

1. A method for updating a time-table in order to reduce a recurrent delay, **characterized in that** it comprises the steps of:
- building (10) a database storing historical data associated with trains circulating with a delay by comparison to a time-table;
- analyzing (20) the database to identify recurrent delays on a time period of interest;
- determining (30) a best decision leading to the management of the recurrent delay;
- optimizing the (40) time-table with this best decision to obtain an updated time-table; and,
- deciding (50) to substitute the time-table with the updated time-table.

2. The method of claim 1, wherein the step of determining (30) a best decision comprises:
- studying correlations between data associated with a recurrent delay;
- elaborating a set of different possible decisions for cancelling the recurrent delay;
- evaluating each possible decision; and,
- selecting the best decision based on the output of the evaluation step.

3. The method of claim 1, wherein the step of elaborating a set of different possible decisions for cancelling the recurrent delay considered is based on the decisions taken by an operator for cancelling the recurrent delay on a period of time of use of the time-table.
